Europäisches Patentamt

European Patent Office

Office européen des brevets

(19)

(11) Veröffentlichungsnummer: **0 209 716 B1**

# (12) EUROPÄISCHE PATENTSCHRIFT

(45) Veröffentlichungstag der Patentschrift: **22.01.92**

(51) Int. Cl.⁵: **H04M 1/74**

(21) Anmeldenummer: **86108130.5**

(22) Anmeldetag: **13.06.86**

(54) **Schaltungsanordnung zur Unterdrückung von Störsignalen auf dem Empfangszweig einer unter Verwendung von elektronischen Bauelementen aufgebauten und damit ohne Sprachübertrager realisierten Teilnehmeranschlussschaltung.**

(30) Priorität: **24.07.85 DE 3526529**

(43) Veröffentlichungstag der Anmeldung:
**28.01.87 Patentblatt 87/05**

(45) Bekanntmachung des Hinweises auf die
Patenterteilung:
**22.01.92 Patentblatt 92/04**

(84) Benannte Vertragsstaaten:
**AT BE CH DE FR GB IT LI LU NL SE**

(56) Entgegenhaltungen:
**FR-A- 2 036 440**
**FR-A- 2 270 740**
**GB-A- 2 149 618**

**PROCEEDINGS OF THE IEEE 1985 CUSTOM INTEGRATED CIRCUITS CONFERENCE, Portland, Oregon, 20.-23. Mai 1985, Seiten 101-104, IEEE, New York, US; J.F. PIETERS et al.: "A monolithic 70 V subscriber line interface circuit"**

(73) Patentinhaber: **SIEMENS AKTIENGESELLSCHAFT**
**Wittelsbacherplatz 2**
**W-8000 München 2(DE)**

(72) Erfinder: **Stader, Harald, Dipl.-Ing.**
**Starnbergerstrasse 21**
**W-8000 München 71(DE)**

EP 0 209 716 B1

**Beschreibung**

Die Erfindung betrifft eine Schaltungsanordnung zur Unterdrückung von Störsignalen auf dem Empfangszweig einer unter Verwendung von elektronischen Bauelementen aufgebauten und damit ohne Sprachübertrager realisierten Teilnehmeranschlußschaltung für den Anschluß einer zweiadrigen Teilnehmeranschlußleitung an die Vermittlungsstelle eines digitalen Zeitmultiplex-Fernsprechsystems, die auf Grund von auf den Sendeweg eingespeisten für die über die Teilnehmeranschlußleitung angeschlossene Teilnehmerstation bestimmten Gebührenimpulssignale entstehen.

Die Gebührenimpulsübermittlung an Teilnehmerstationen, die über zweiadrige Teilnehmeranschlußleitungen an eine Vermittlungsstelle angeschlossen sind, zum Zwecke der Gebührenzählung beim Teilnehmer erfolgt durch Übertragung von Wechselspannungsimpulsen mit Frequenzen, die außerhalb des Sprachbandes liegen und beispielsweise 12 kHz oder 16 kHz betragen.

Ohne besondere Maßnahmen können diese Impulse von der Teilnehmerstation zurück auf den Empfangszweig der Teilnehmeranschlußschaltung und von dort an die Einrichtungen zur Analog-Digital-Wandlung gelangen. Bei der für die Gebührenzählung erforderlichen Amplitude kann eine solche unerwünschte Beeinflussung dieser Einrichtungen deren Funktion erheblich beeinträchtigen.

In herkömmlichen Vermittlungssystemen, bei denen die Einspeisung von Wechselstromimpulsen (16 bzw. 12 kHz) symmetrisch erfolgt und bei denen ein Sprachübertrager zur Auskopplung der der Codierung zuzuführenden Sprachsignale vorgesehen ist, erfolgt daher eine Störsignalunterdrückung mit Hilfe eines eine Vierpolschaltung darstellenden Filters Fi in Form eines Parallelresonators. Aufwand und Satzbedarf eines solchen Filters sind Jedoch beträchtlich, hinzu kommt, daß die Leitungssymmetrie der Teilnehmeranschlußleitung gestört wird, mit den bekannten Folgen der Längsspannungsempfindlichkeit.

Die Aufgabe der Erfindung besteht nun darin, unter der Voraussetzung einer Teilnehmeranschlußschaltung, die unter Verwendung von elektronischen Bauelementen aufgebaut und damit ohne Sprachübertrager realisiert ist, und bei der die Einspeisung der Gebührenimpulssignale auf den Sendezweig der Teilnehmeranschlußschaltung erfolgt, eine Schaltungsanordnung zur Unterdruckung der dem entsprechend auf dem Empfangszweig auftretenden Störsignale anzugeben, die bezüglich der genannten Eigenschaften der bekannten Filterschaltungen günstiger ist.

Erfindungsgemäß wird die Aufgabe mit einer Schaltungsanordnung der eingangs genannten Art gelöst, die dadurch gekennzeichnet ist, daß an den Empfangszweig der Teilnehmeranschlußschaltung eine Zweipolfilterschaltung angeschlossen ist, die aus der Parallelschaltung eines Serienresonanzkreises und eines Parallelresonanzkreises besteht, deren Resonanzfrequenz jeweils der Frequenz der zur Gebührenimpulsübermittlung eingespeisten Signale entspricht.

Die erfindungsgemäße Schaltungsanordnung hat nicht nur einen geringen Platzbedarf, insbesondere wenn gemäß einer weiteren Ausgestaltung der Erfindung die Spulen der Resonanzkreise durch Gyratorschaltungen realisiert sind, sie erfordert darüber hinaus auch nur einen Anschlußstift an der gewöhnlich als integrierte Schaltung aufgebauten Teilnehmeranschlußschaltung, was ein sehr erwünschter Effekt ist. Hinzu kommt, daß einerseits im Sprachfrequenzbereich praktisch keine Beeinflussung des Frequenzgangs erfolgt und die Einfügungsdämpfung gering ist, andererseits eine starke Bedämpfung im Bereich der 16 kHz-Impulssignale gegeben ist.

Nachstehend wird die Erfindung anhand von Ausführungsbeispielen unter Bezugnahme auf eine Zeichnung näher erläutert.

In der Zeichnung zeigen:

Fig. 1 die schon angesprochene bekannte Lösung zur Störsignalunterdrückung,

Fig. 2 ein Prinzipschaltbild der erfindungsgemäßen Schaltungsanordnung,

Fig. 3 den Kennlinienverlauf der erfindungsgemäßen Schaltungsanordnung,

Fig. 4 ein Ausführungsbeispiel der erfindungsgemäß eingesetzten Filterschaltung, bei dem die Schwingkreisspulen durch Gyratorschaltungen ersetzt sind.

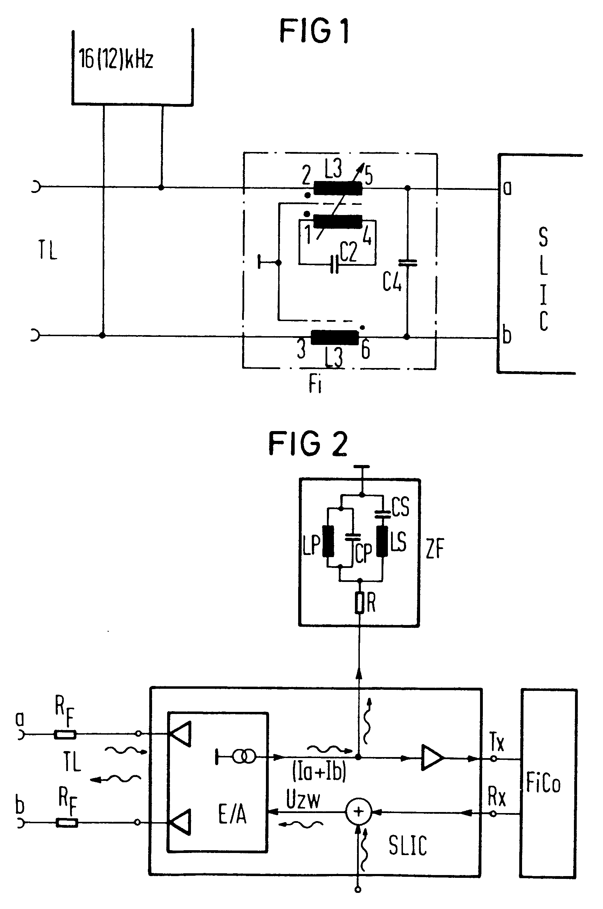

Das Blockschaltbild einer elektronischen Teilnehmeranschlußschaltung gemäß Fig. 2 zeigt als wesentliche Bestandteile eine Baugruppe SLIC sowie eine Baugruppe FiCo.

Die Baugruppe SLIC, an die die Teilnehmeranschlußleitung TL mit den Adern a und b angeschlossen ist, umfaßt gewöhnlich in nicht näher dargestellter Weise Schaltungsteile für die Teilnehmerspeisung, für den Überspannungsschutz, für die Rufeinspeisung, für die Signalisierung und Überwachung, für die Zweidraht-/Vierdrahtumsetzung sowie für die Prüfung.

Der Schaltungsteil FiCo umfaßt die Schaltungsteile für die Filterung und die Analog-Digitalwandlung bzw. Digital-Analogwandlung. Er ist mit dem Koppelfeld der Vermittlungsstelle, zu der diese Teilnehmeranschlußschaltung gehört, verbunden zu denken. Es ist auch möglich, daß die erwähnten Schaltelemente für die Zweidraht-/ Vierdrahtumsetzung Bestandteil der Baugruppe FiCo sind.

In der Fig. 2 ist auch angedeutet, daß auf den Sendezweig der Teilnehmeranschlußschaltung, also denjenigen, der über den entsprechenden Teil einer Eingangs-/Ausgangsstufe E/A zu der b-Ader der Teilnehmeranschlußleitung führt, ein Wechselstromsignal eingespeist wird, das der Gebührenzählung beim Teilnehmer dient und das bespielsweise eine Frequenz von 16 kHz haben soll. Wie in der Figur ferner angedeutet ist, können Teile dieser Wechselstromsignale nach einer Spiegelung an der an die Teilnehmeranschlußleitung angeschlossen zu denkenden Teilnehmerstation über die a-Ader auf den Empfangszweig der Teilnehmeranschlußleitung gelangen und Von dort wie auch Sprachsignale an die Baugruppe FiCo gelangen, deren Bestandteile sie in unerwünschter Weise beeinflussen, sofern nicht die erfindungsgemäßen Maßnahmen ergriffen sind.

Diese Maßnahmen bestehen im Anschluß einer Zweipolfilterschaltung ZF zwischen dem Empfangszweig der Teilnehmeranschlußschaltung und einem Erdpotential führenden Schaltungspunkt, die wie ebenfalls die Figur zeigt, aus der Parallelschaltung eines Parallelresonanzkreises RP und eines Serienresonanzkreises RS besteht. Die Resonanzkreise bestehen bei dieser Darstellung jeweils aus einer Spule L und aus einem Kondensator C, wie angedeutet kann die Spule dieser Resonanzkreise jedoch auch durch eine Gyratorschaltung nachgebildet sein.

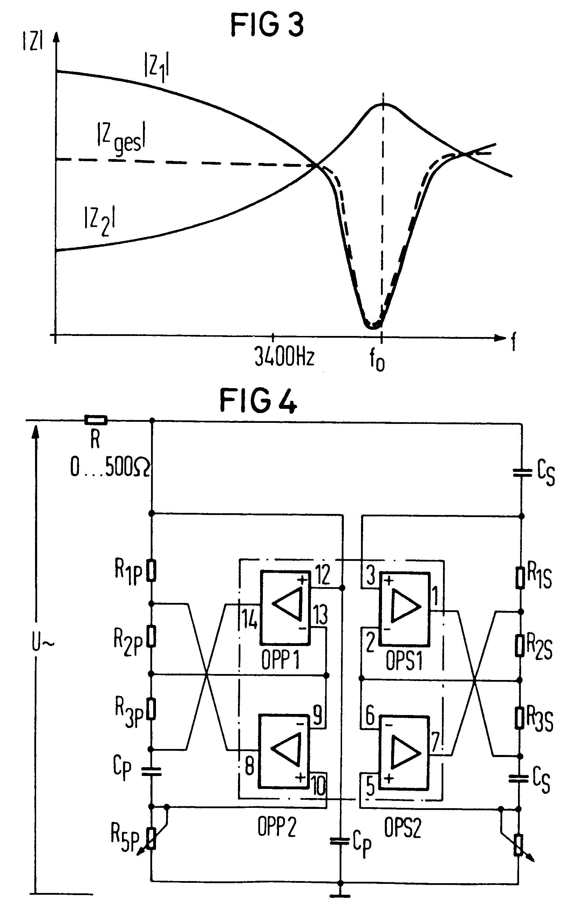

Die beiden Resonanzkreise weisen dieselbe Resonanzfrequenz auf, so daß sich ein Frequenzverhalten ergibt, wie dies in der Fig. 3 dargestellt ist.

Danach ist der durch die Filterschaltung bedingte Widerstand, der die Einfügungsdämpfung bestimmt, bedingt durch das gegenläufige Widerstandsverhalten von Parallelresonanzkreis und Serienresonanzkreis praktisch frequenzunabhängig und fällt gegen die Resonanzfrequenz hin, die der Frequenz der im Zusammenhang mit der Gebührenzählung eingespeisten Wechselstromsignale entspricht, abrupt ab. Die auf dem Empfangszweig der Teilnehmeranschlußschaltung auftretenden Störsignale werden daher gegen Erde abgeleitet und können nicht an die Baugruppe FiCo gelangen.

Die erfindungsgemäß vorgesehene Filterschaltung ist, wie dargelegt, ein Zweipol, so daß für den Anschluß an der Baugruppe SLIC lediglich ein Anschlußpin vorgesehen zu sein braucht.

Bei der in Figur 4 dargestellten Ausführungsform eines erfindungsgemäß vorgesehenen Zweipolfilters sind die Induktivitäten der Resonanzkreise durch. Gyratorschaltungen realisiert, die jeweils aus zwei Operationsverstärkern, einer Reihe von Widerständen und einem Kondensator bestehen. Die zum Parallelschwingkreis gehörende Gyratorschaltung gemäß Figur 4 umfaßt die Reihenschaltung aus den Widerständen R1p bis R3p, aus dem Kondensator C'P und dem einstellbaren Widerstand R5p, die zwischen den einem Pol der Filterschaltung, der an Erdpotential liegt, und dem einen Anschluß eines Widerstandes R angeschlossen ist, der zum zweiten Pol der Filterschaltung führt. Die nicht invertierenden Eingänge ( + ) der Operationsverstärker OPP1 und OPP2 sind an den Widerstand R bzw. an den Verbindungspunkt des Kondensators C'p und R5p angeschlossen. Die invertierenden Eingänge (-) der Operationsverstärker sind miteinander verbunden und an den Verbindungspunkt der Widerstände R2p und R3p angeschlossen. Der Ausgang des Operationsverstärkers OPP1 liegt am Verbindungspunkt des Widerstandes R3p Und des Kondensators C'p, der Ausgang des Operationsverstärkers OPP2 an dem Verbindungspunkt der Widerstände R1p und R2p. Die in soweit dargestellte Schaltungsanordnung wirkt elektrisch wie eine Spule und wird durch den am nicht invertierenden Eingang des Operationsverstärkers OPP1 angeschlossenen und andererseits an Erdpotential liegenden Kondensator Cp zu einem Parallellresonanzkreis ergänzt.

In entsprechender Weise ist die Induktivität des Serienresonanzkreises durch die Widerstände R1s bis R3s, den Kondensator C's, den Widerstand R5s und die Operationsverstärker OPS1 und OPS2 gebildet. Der Kondensator Cs, ergänzt diese Schaltungsanordnung zu einem Serienresonanzkreis, der zwischen dem Erdpotential führenden Schaltungspunkt und dem einen Anschluß des Widerstandes R angeschlossen ist und damit dem vorbeschriebenen Parallelresonanzkreis parallel geschaltet ist.

Durch entsprechende Einstellung der erwähnten veränderbaren Widerstände R3p und R5s werden die beiden Resonanzkreise jeweils auf die Resonanzfrequenz und z.B. 16 kHz oder 12 kHz eingestellt. Typische Werte für die Widerstände R1p bis R3p und R1s und R3s sind 5,6 kOhm für den nachgebildeten Induktivitätswert 1mH, wozu der Widerstandswert des Widerstands R5 ebenfalls 5,6 kOhm der Kapazitätswert des Kondensatoran C'p und C's 32 pF beträgt. Die Kapazitätswerte der Kondensatoren Cs bzw. Cp betragen, 0,1 uF.

Bezugszeichenliste

| SLIC, FiCo | Teilnehmeranschlußschaltungsbaugruppe |
| TL | Teilnehmeranschlußleitung |
| a, b | Ader |
| E/A | Eingangs-/Ausgangsstufe |
| ZF | Zweipolfilterschaltung |
| RP | Parallelresonanzkreis |
| RS | Serienresonanzkreis |
| L | Spule |
| C | Kondensator |
| R1p bis R3p | Widerstand |
| C'P | Kondensator |

| R5p | einstellbarer Widerstand |
| R | Widerstand |
| OPP1, OPP2 | Operationsverstärker |
| R1s bis R3s | Widerstand |
| C's | Kondensator |
| R5s | einstellbarer Widerstand |

**Patentansprüche**

1. Schaltungsanordnung zur Unterdrückung von Störsignalen auf dem Empfangszweig einer unter Verwendung von elektronischen Bauelementen aufgebauten und damit ohne Sprachübertrager realisierten Teilnehmeranschlußschaltung für den Anschluß einer zweiadrigen Teilnehmeranschlußleitung an die Vermittlungsstelle eines digitalen Zeitmultiplex-Fernsprechsystems, die aufgrund von auf den Sendezweig eingespeisten für die über die Teilnehmeranschlußleitung angeschlossene Teilnehmerstation bestimmten Gebührenimpulssignale entstehen, **dadurch gekennzeichnet,** daß zwischen den Empfangszweig der Teilnehmerauschlußschaltung (SLIC) und einen Erdpotential führenden Schaltungspunkt eine Zweipolfilterschaltung (ZF) angeschlossen ist, die aus der Parallelschaltung eines Serienresonanzkreises (LSCS) und eines Parallelresonanzkreises (LPCP), besteht, deren Resonanzfrequenz jeweils der Frequenz (z.B. 16 kHz) der zur Gebührenimpulsübermittlung eingespeisten Signale entspricht.

2. Schaltungsanordnung nach Anspruch 1, **dadurch gekennzeichnet,** daß die Resonanzkreise jeweils unter Verwendung einer Gyratorschaltung (R1p bis R3p, C'p, R5p, OPP1, OPP2; R1s bis R3s, C's, R5s, OPs1, OPs2)-aufgebaut sind.

**Claims**

1. Circuit arrangement for suppressing interference signals on the receiving branch of a subscriber line circuit constructed using electronic components and hence realised without speech transformers for the connection of a two-wire subscriber line to the exchange of a digital time-division multiplex telephone system, which interference signals occur as a result of charge pulse signals fed into the transmitting branch and intended for the subscriber station connected via the subscriber line, characterised in that connected between the receiving branch of the subscriber line circuit (SLIC) and a circuit point carrying a ground potential is a two-pole filter circuit (ZF), which consists of the parallel connection of a series resonance circuit (LSCS) and of a parallel resonance circuit (LPCP), and the resonance frequency of which corresponds in each case to the frequency (for example 16 kHz) of the signals fed in for the transmission of the charge pulses.

2. Circuit arrangement according to Claim 1, characterised in that the resonance circuits are each constructed using a gyrator circuit (R1p to R3p, C'p, R5p, OPP1, OPP2; R1s to R3s, C's, R5s, OPs1, OPs2).

**Revendications**

1. Montage pour supprimer des signaux parasites dans la branche de réception d'un circuit de raccordement d'abonné constitué moyennant l'utilisation de composants électroniques et réalisé par conséquent sans translateur vocal, pour le raccordement d'une ligne bifilaire d'abonné à un central d'un système de téléphonie numérique à multiplexage temporel, signaux parasites qui apparaissent en raison de signaux impulsionnels de taxation introduits dans la branche d'émission et destinés au poste d'abonné raccordé par l'intermédiaire de la ligne d'abonné, caractérisé par le fait qu'entre la branche de réception du circuit de raccordement d'abonné (SLIC) et un point du montage placé au potentiel de terre est branché un circuit de filtre formant dipôle (ZF), qui est constitué par le montage en parallèle d'un circuit résonnant série (LSCS) et d'un circuit résonnant parallèle (LPCP), dont la fréquence de résonance correspond respectivement à la fréquence (par exemple 16 kHz) des signaux introduits pour la transmission des impulsions de taxation.

2. Montage suivant la revendication 1, caractérisé par le fait que les circuits résonnants sont constitués respectivement moyennant l'utilisation d'un circuit gyrateur (R1p à R3p, C'p, R5p, OPP1, OPP2; R1s à R3s, C's, R5s, OPs1, OPs2).

# FIG 1

# FIG 2

# FIG 3

# FIG 4